# EUROPEAN PATENT SPECIFICATION

(11) **EP 1 026 306 B1**
(45) Date of publication and mention of the grant of the patent: **05.11.2003**
(21) Application number: 00100612.1
(22) Date of filing: 13.01.2000
(51) Int. Cl.: D06F 75/12, A47J 31/54

(54) **Steam generator for cleaning machines, clothes irons, coffee machines and the like**
Dampferzeuger für Reinigungsmaschinen, Bügeleisen, Kaffemaschinen und ähnliche Maschinen
Générateur de vapeur pour machines de nettoyage, fers à repasser, machine à café et machines similaire

(30) Priority: 01.02.1999 IT PN990015
(43) Date of publication of application: 09.08.2000
(73) Proprietor: Euro Star S.r.l., 31058 Susegana, Treviso (IT)
(72) Inventor: Di Leta, Cristiano, 31020 S. Vendemiano, Treviso (IT)
(74) Representative: Giugni, Valter

(56) References cited:
- EP-A- 0 638 684
- EP-A- 0 681 141
- EP-A- 0 821 096
- GB-A- 2 309 071

## Description

The present invention refers to a steam generator with automatic water refill function, which is suitable for use in a number of different applications, such as for instance steam cleaning machines, clothes irons, fan-assisted or suction-type ironing boards with refill function, coffee brewing and similar machines.

In particular, the present invention refers to a steam generator that has a small size and is provided with electric heating means, this steam generator being further connected to a water reservoir from which it is supplied, when required, by means of a pump and related conduits provided with control valves.

Prior-art steam generators are generally known to be substantially of two types, wherein the first one of these types is provided with an internal electric heating element, which therefore is at least partially submerged in water, while the second type has an electric heating element that is associated externally to the bottom of the steam generator.

Steam generators of the first type have a number of serious drawbacks deriving mainly from the formation of scale that tends to deposit on the electric heating element, as well as the continuous alternation of thermal shocks to which the same heating element is subjected. Such a scale formation is due to the presence of salts in the water that is converted into steam, while thermal shocks are due to the marked temperature rise occurring in the portion of the electric heating element that is not submerged in water and the equally marked temperature decrease that is brought about when cold water is let into the boiler.

The second type of steam generators, as described and illustrated for instance in EP 0 821 096, which is considered as the closest prior art, has been proposed to just try to overcome the drawbacks typically associated with the above cited appliances of the first type. However, even this solution fails to prove fully effective, since it is associated with considerable construction-related difficulties and functional limitations.

In the first place, the steam generator is provided with a body having a complex shape and constituted by two asymmetrical shells, which therefore complicates the assembly thereof inside the respective housing-container. Furthermore, for a correct operation of the steam generator to be obtained, the bottom of the steam generator must be provided with at least two portions at different levels (in a preferred manner, the bottom is inclined), so that both construction and assembly are further complicated. Owing to such a variation in the level of the bottom of the steam generator, the location of the thermostat and the water inlet aperture in the steam generator are rigidly constrained. In other words, the thermostat must be mounted under the electric heating plate, in correspondence of the portion thereof which is the highest in level, while the water must be let into the steam generator in such a manner as to make sure that it hits the most elevated portion of the bottom thereof.

Such construction-related difficulties and constraints as seen above for a steam generator of the kind described in EP 0 821 096 have furthermore negative consequences on the actual operation of the steam generator itself.

When for instance such a steam generator is associated to a clothes iron, care must be taken in ensuring and maintaining the exact and correct position of the same steam generator. Should for instance said steam generator be laid or placed in an inclined position, a corresponding alteration would in fact occur in the level of the water inside the generator, thereby unacceptably modifying the conditions governing both the steam formation process and the water refill function needed to restore the proper water level in the boiler.

A basic requirement placed on this kind of appliances is generally known to lie on the one side in their ability of producing steam very quickly and, on the other side, constantly maintaining a sufficient amount of water in their interior. Now, these requirements are clearly in contrast with each other.

Moreover, steam generators of this kind cannot be associated to steam-operating cleaning machines or, anyway, to industrial-type equipment that generally require clearly higher standards of performance capabilities in terms of steam generation at high pressure and rapidly also during water refill phases. As a matter of fact, the arrangement of the heating element under the bottom of the steam generator does not allow for the heating power to be increased beyond a certain value, owing to the limited surface area of the bottom itself. This surface area might of course be made larger, but the resulting increase in the overall size of the steam generator would prove unacceptable.

European patent application EP 0 681 141 A1 discloses an instantaneous single-stage steam generator comprising a plate made of aluminium or other suitable material, a set of outside plate resistances and a network of inside channels with at least two upstream chambers and one downstream compensation chamber. The first pre-chamber is provided with an injector formed by a drilled pipe equipped with a plurality of micro-holes extending radially towards the walls of the pre-chamber, in order to allow an immediate impact of the water molecules with a high temperature surface.

The European patent EP 0 438 112 discloses a steam iron featuring a hybrid solution for the steam generator, which is provided with an electric heating plate attached under the bottom of the steam generator itself, as well as with a L-shaped electric heating element arranged inside it. It quite clearly appears that such a solution actually has all drawbacks that are typically associated with the two afore described solutions.

The most recent solution proposed for a steam iron with automatic water refill facility is disclosed in the European patent EP 0 843 039, in which the steam generator is again provided with a heating element arranged under the bottom thereof, while the whole apparatus is governed by a microprocessor-based electronic control arrangement. The cost of such an electronic control arrangement, which weighs heavily on the cost of the whole apparatus, adds practically to the drawbacks that are typically encountered in this type of steam generators in which the heating element is arranged externally under the bottom of the generator.

It therefore is a main purpose of the present invention to provide a steam generator with automatic water refill facility, which does away with the drawbacks and the limitations that are typically associated with prior-art steam generators. This purpose is achieved by the steam generator of claim 1.

In particular, this new steam generator provides a maximum extent of freedom in the selection of the position to be assigned to both the water inlet aperture and the control thermostats, so as to be able to vary the amount, ie. the flow rate of water being let into the generator, as well as the rapidity in the generation of steam. Moreover, the arrangement of the electric heating element allows for the power output of the steam generator to be increased, and even double the normal rating thereof, in the case of applications in industrial equipment or steam cleaning machines.

The steam generator according to a preferred embodiment of the present invention is characterized in that it is formed by a hollow body which is arranged with its major axis substantially vertical and has lateral faces having a surface that is larger than the surface of its upper and lower bases, the electric heating element being attached to at least one of said lateral faces.

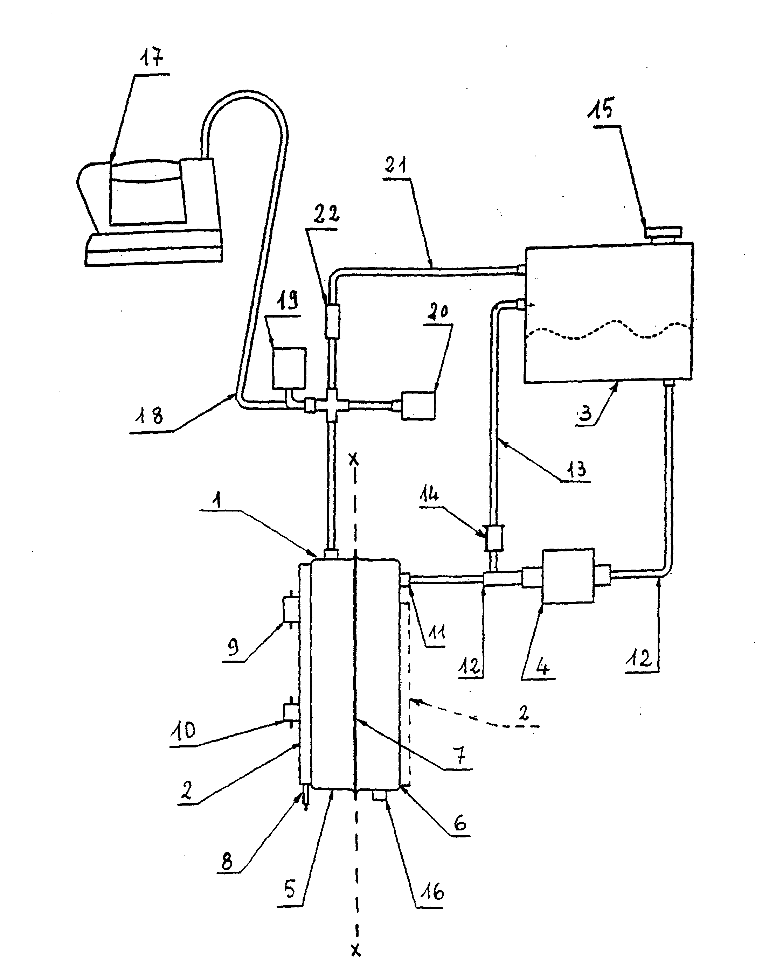

Features and advantages of the present invention will be more readily understood from the description that is given below by way of non-limiting example with reference to the accompanying drawing, in which Figure 1 is a schematic view of the steam generator associated to a clothes iron.

The steam generator according to the present invention is constituted by a hollow body 1, on the outer surface of which there is attached an electric heating element 2. The hollow body 1 is connected hydraulically to a water reservoir 3 via a pump 4. The hollow body 1 is formed by two half-shells 5 and 6 which are joined to each other along the peripheral edge 7 according to a substantially vertical plane X-X. The hollow body 1 is preferably in the shape of a parallelepiped with the lateral faces thereof that have a larger surface than the surface of the upper and lower bases thereof The hollow body 1 may of course be in any other suitable shape, such as for instance a round shape.

The electric heating element 2 is attached to the outside surface of one of the half-shells (the half-shell indicated at 5, in the example shown in the Figure), ie. to a lateral and vertical surface of the hollow body 1 ensuring a larger area. The heating element 2 is provided with terminals 8 for connection to the power supply mains. A thermostat 9 controlling the operation of the pump 4 is mounted on the electric heating element 2, possibly along with a further safety thermostat 10.

Water is let into the steam generator through an aperture 11, which is provided in the half-shell 6 opposing the half-shell that carries the electric heating element. The aperture 11 is connected to the water reservoir 3 via a conduit 12 in which the pump 4 is inserted. Moreover, the aperture 11 is connected to the water reservoir 3 via a pipe 13 branching off the conduit 12. This offshoot pipe 13 is provided with a non-return valve 14 and flows into the upper portion of the reservoir 3 above the highest allowable water level in the same reservoir. Said offshoot pipe 13 acts as a water bleeder.

The reservoir 3 is of course provided with a water fill aperture, which is closed by a cap 15, and the hollow body 1 is provided with a bottom drain that is closed by a cap 16. This drain can on the other hand be also arranged in the upper portion of the body 1.

In the embodiment illustrated by way of example in the Figure, the steam generator is associated to a steam clothes iron 17 via a conduit 18, to which there are connected an electromagnetic valve 19 and a safety pressure switch 20. Furthermore, the conduit 18 is provided with an offshoot pipe 21 provided with a safety valve 22.

The steam generator according to the present invention is innovative owing basically to its substantially vertical arrangement, which is in full contrast with the generally accepted and used prior art, according to which steam generators of this kind develop according to a substantially horizontal arrangement, with the related heating element provided in or under the bottom. Such a horizontal arrangement was generally considered advantageous in that heat transfer took place over the whole surface of the heating element itself.

The present invention is on the contrary based on the observation that, if the heating element is arranged vertically, the efficiency of the steam generator does not undergo any noticeable decrease in efficiency, while important advantages are obtained in return from both a construction and a functional point of view. As a matter of fact, a maximum extent of freedom is allowed in selecting the position of the aperture for letting the water into the generator, as well as the position where to locate the water inlet and safety thermostats needed to control the water supply into the generator and to prevent the same generator from operating under dry, ie. no-water conditions.

It has been experimentally ascertained that the water inlet can be arranged on any one of the sides of the body 1 and the water jet must be directed against the wall that carries the electric heating element 2 on its outside, in a zone that lies at a minimum distance of 10 mm from the axis of the control thermostat 9. By varying this distance and/or the size of the water inlet aperture I accordingly, the amount of water to be filled in the steam generator can be varied according to actual needs, in particular by reducing the frequency of the operations of the pump 4 to full advantage of the durability thereof.

On the whole, the steam generator according to the present invention has a simple construction and a compact size, which makes it most easy to mount inside an outer casing or housing (not shown in the Figure). In fact, it is not necessary for it to be arranged in a precisely vertical position, since a limited inclination thereof (eg. up to 15°) in any direction with respect to its centre plane X-X, does not affect the generator performance to any appreciable extent.

It must finally be stressed that the steam generator according to the present invention can be boosted in its performance capabilities through the application of a second electric heating element, similar to the previously described heating element 2, on the outer surface of the second half-shell 6. The power output of the generator can be doubled in such a manner as to be able to generate steam very quickly and at high pressure values even during water inlet phases, such as required for instance in applications connected to steam cleaning equipment.

## Claims

1. Automatic-refill steam generator for use in conjunction with steam cleaning equipment, clothes irons, fan-assisted ironing boards with refill function, coffee and similar brewing machines, provided with at least an electric heating element (2) attached to the outside of the steam generator and equipped with control thermostat (9), said steam generator being connected on one side to a water reservoir (3) via a pump (4) and at least a pipe (12), and being further connected on the other side to the steam using apparatus via a pipe (18) provided with an electromagnetic valve (19) and a pressure switch (20), said steam generator being constituted by a hollow body (1) formed by a first and a second half-shell (5, 6) **characterized in that** said first and second half-shells (5, 6) are joined to each other along the peripheral edge thereof according to a substantially vertical plane (X-X), said electric heating element (2) being externally attached to a lateral face of said first half-shell (5), said hollow body (1) being provided with a water inlet aperture (11) situated in a lateral face of said second half-shell (6) opposing the lateral face of said first half-shell (5) carrying said electric heating element (2), such that a water jet let into the steam generator through said aperture (11) is directed against said first half-shell carrying said heating element (2).

2. Steam generator according to claim 1, **characterized in that** said hollow body (1) is in the shape of a parallelepiped whose lateral faces have a larger surface area than the one of the upper and lower bases thereof

3. Steam generator according to any of the preceding claims, **characterized in that** said hollow body (1) is mounted with an inclination of up to 15° in any direction with respect to the centre plane (X-X) thereof.

4. Steam generator according to any of the preceding claims, **characterized in that** a second electric heating element (2) is attached on to the outer surface of the second half-shell (6).

5. Steam generator according to any of the preceding claims, **characterized in that** said water inlet aperture (11) is located adjacent the upper base of said hollow body (1).

## Patentansprüche

1. Dampferzeuger mit automatischer Nachfüllung zum Einsatz in Verbindung mit Dampf-Reinigungseinrichtungen, Bügeleisen, gebläsegestützten Bügeltischen mit Nachfüllfunktion, Kaffee- und ähnlichen Brühmaschinen, der mit wenigstens einem elektrischen Heizelement (2) versehen ist, das an der Außenseite des Dampferzeugers angebracht und mit einem Steuerthermostat (9) ausgestattet ist, wobei der Dampferzeuger an einer Seite über eine Pumpe (4) und wenigstens ein Rohr (12) mit einem Wasserbehälter (3) verbunden ist und des Weiteren an der anderen Seite über ein Rohr (18), das mit einem elektromagnetischen Ventil (19) und einem Druckschalter (20) versehen ist, mit der dampfverbrauchenden Vorrichtung verbunden ist, wobei der Dampferzeuger durch einen hohlen Körper (1) gebildet wird, der aus einer ersten und einer zweiten Halbschale (5, 6) besteht, **dadurch gekennzeichnet, dass** die erste und die zweite Halbschale (5, 6) miteinander am Umfangsrand derselben in einer im Wesentlichen vertikalen Ebene (X-X) verbunden sind, wobei das elektrische Heizelement (2) außen an einer Seitenfläche der ersten Halbschale (5) angebracht ist, der hohle Körper (1) mit einer Wassereinlassöffnung (11) versehen ist, die sich an einer Seitenfläche der zweiten Halbschale (6) befindet, die der Seitenfläche der ersten Halbschale (5) gegenüberliegt, die das elektrische Heizelement (2) trägt, so dass ein Wasserstrahl, der über die Öffnung (11) in den Dampferzeuger eingelassen wird, auf die erste Halbschale gerichtet wird, die das Heizelement (2) trägt.

2. Dampferzeuger nach Anspruch 1, **dadurch gekennzeichnet, dass** der hohle Körper (1) die Form eines Parallelepipeds hat, dessen Seitenflächen eine größere Oberfläche haben als die obere oder untere Grundfläche desselben.

3. Dampferzeuger nach einem der vorangehenden Ansprüche, **dadurch gekennzeichnet, dass** der hohle Körper (1) mit einer Neigung von bis zu 15° in jeder beliebigen Richtung in Bezug auf die Mittelebene (X-X) desselben angebracht ist.

4. Dampferzeuger nach einem der vorangehenden Ansprüche, **dadurch gekennzeichnet, dass** ein zweites elektrisches Heizelement (2) an der Außenfläche der zweiten Halbschale (6) angebracht ist.

5. Dampferzeuger nach einem der vorangehenden Ansprüche, **dadurch gekennzeichnet, dass** die Wassereinlassöffnung (11) an die obere Grundfläche des hohlen Körpers (1) angrenzend angeordnet ist.

## Revendications

1. Générateur de vapeur à remplissage automatique en vue d'une utilisation en liaison avec un équipement de nettoyage à la vapeur, des fers à repasser, des planches à repasser à ventilateur à fonction de remplissage, des machines à café ou à boisson similaires, muni d'au moins un élément chauffant électrique **(2)** fixé à l'extérieur du générateur de vapeur et équipé d'un thermostat de contrôle **(9)**, ledit générateur de vapeur étant raccordé, d'un côté, à un réservoir d'eau **(3)** par l'intermédiaire d'une pompe **(4)** et d'au moins un conduit **(12)**, et étant, de plus, raccordé, de l'autre côté, à l'appareil utilisant la vapeur via un conduit **(18)** muni d'une vanne électromagnétique **(19)** et d'un commutateur de pression **(20)** ; ledit générateur de vapeur étant constitué d'un corps creux **(1)** formé par une première et une deuxième demi-coquilles **(5, 6), caractérisé en ce que** lesdites première et deuxième demi-coquilles **(5, 6)** sont jointes l'une à l'autre le long de leur bord périphérique suivant un plan **(X-X)** sensiblement vertical, ledit élément chauffant électrique **(2)** étant fixé extérieurement à une face latérale de ladite première demi-coquille **(5),** ledit corps creux **(1)** étant muni d'une ouverture d'admission d'eau **(11)** située dans une face latérale de ladite deuxième demi-coquille **(6),** à l'opposé de la face latérale de ladite première demi-coquille **(5)** portant ledit élément chauffant électrique **(2)**, de sorte qu'un jet d'eau introduit dans le générateur de vapeur à travers ladite ouverture **(11)** est envoyé contre ladite première demi-coquille portant ledit élément chauffant **(2).**

2. Générateur de vapeur selon la revendication 1, **caractérisé en ce que** ledit corps creux **(1)** est de la forme d'un parallélépipède, dont les faces latérales ont une surface plus grande que celle de ses bases supérieure et inférieure.

3. Générateur de vapeur selon l'une des revendications précédentes, **caractérisé en ce que** ledit corps creux **(1)** est monté avec une inclinaison de 15° maximum dans une direction quelconque par rapport à son plan central **(X-X).**

4. Générateur de vapeur selon l'une des revendications précédentes, **caractérisé en ce qu'**un deuxième élément chauffant électrique **(2)** est fixé sur la surface extérieure de la deuxième demi-coquille **(6).**

5. Générateur de vapeur selon l'une des revendications précédentes, **caractérisé en ce que** ladite ouverture d'admission d'eau **(11)** est située près de la base supérieure dudit corps creux **(1).**
